# EUROPEAN PATENT SPECIFICATION

(11) **EP 4 380 786 B1**
(45) Date of publication and mention of the grant of the patent: **11.11.2026**
(21) Application number: 22762138.0
(22) Date of filing: 03.08.2022
(51) Int. Cl.: B29C 70/44, B29C 33/50

(54) **PROCESS FOR THE MANUFACTURE OF HOLLOW MANUFACTURED ARTICLES MADE OF COMPOSITE MATERIAL**
VERFAHREN ZUR HERSTELLUNG VON HOHLEN GEGENSTÄNDEN AUS VERBUNDWERKSTOFF
PROCÉDÉ DE FABRICATION D'ARTICLES CREUX MANUFACTURÉS EN MATÉRIAU COMPOSITE

(30) Priority: 04.08.2021 IT 202100021119
(43) Date of publication of application: 12.06.2024
(73) Proprietor: Lapiana, Massimiliano, 41124 Modena (MO) (IT)
(72) Inventor: Lapiana, Massimiliano, 41124 Modena (MO) (IT)
(74) Representative: Brunacci, Marco
(86) International application number: PCT/IB2022/057206
(87) International publication number: WO 2023/012689

(56) References cited:
- WO-A2-2012/064447

## Description

### Technical Field

The present invention relates to a process for the manufacture of hollow manufactured articles made of composite materials.

### Background Art

A variety of manufacturing processes of hollow manufactured articles are known that employ composite materials, suitably machined and shaped, to make particularly light and strong manufactured articles which, by virtue of their characteristics, find application in many technical fields.

In general, this type of process combines two or more constituent materials, having physical/mechanical properties different from each other, to make a composite material used in turn to make a manufactured article with superior physical/mechanical properties compared to those of the starting constituent materials.

Specifically, composite materials comprise at least one first constituent material, the so-called reinforcement, which has the aim of providing strength and stiffness to the final manufactured article and at least one second constituent material, the so-called die, which has the aim of operating as a filler material and of adhering to the reinforcement in order to provide stability and geometry to the final manufactured article.

Commonly, this type of process subjects the manufactured article to highpressure and high-temperature processes that allow the composite material to polarize, so as to give the manufactured article particular strength.

Advantageously, by means of certain molding processes, such as autoclave processes by means of disposable bag and/or Resin Transfer Molding (RTM) processes, the processes of known type enable manufactured articles made of composite material of the hollow type to be made.

This type of process does however have some drawbacks.

In particular, only a particularly limited number of constituent materials can be used to make manufactured articles of the hollow type by means of the processes of known type.

In fact, not all constituent materials allow for hollow-geometry manufactured articles to be made capable, given their conformation, of withstanding the pressures and temperatures to which they are subjected by the processes of known type.

On the other hand, the reduction in pressure and temperature would ensure an insufficient degree of curing of the composite material and significantly limit the strength of the manufactured products and their fields of application.

In addition, the processes of known type are particularly complex and expensive.

### Description of the Invention

The main aim of the present invention is to devise a process which allows employing any constituent material to make the hollow manufactured articles made of composite materials.

Another object of the present invention is to devise a process which allows the composite material for the manufacture of hollow manufactured articles to be subjected to higher pressures and/or temperatures than those applied by the processes of known type regardless of the composite material used.

A further object of the present invention is to devise a process for the manufacture of hollow manufactured articles made of composite materials that is particularly inexpensive compared to the processes of known type.

An additional object of the present invention is to devise a process for the manufacture of hollow manufactured articles made of composite materials that is simple and easy to make compared to the processes of known type.

Another object of the present invention is to devise a process for the manufacture of hollow manufactured articles made of composite materials that can overcome the aforementioned drawbacks of the prior art within the framework of a simple, rational, easy-to-use and cost-effective solution.

The aforementioned objects are achieved by the present process for the manufacture of hollow manufactured articles made of composite materials having the characteristics of claim 1.

The aforementioned objects are achieved by this system for the manufacture of hollow manufactured articles made of composite materials having the characteristics of claim 8.

### Brief Description of the Drawings

Other characteristics and advantages of the present invention will become more apparent from the description of a preferred, but not exclusive, embodiment of a process for the manufacture of hollow manufactured articles made of composite materials, illustrated by way of an indicative, yet non-limiting example, in the accompanying tables of drawings in which:

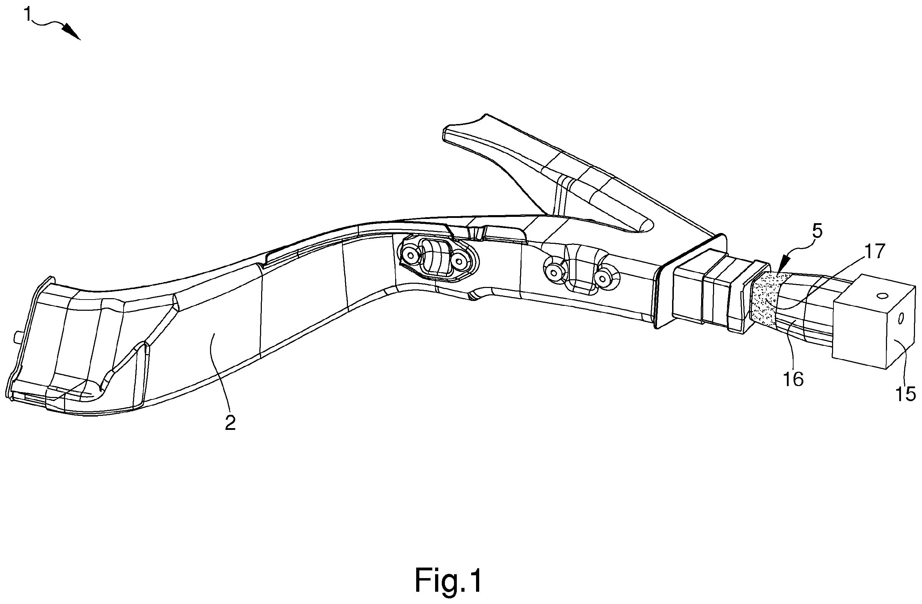

Figure 1 is an axonometric view of some components of the system used to execute the process according to the invention;

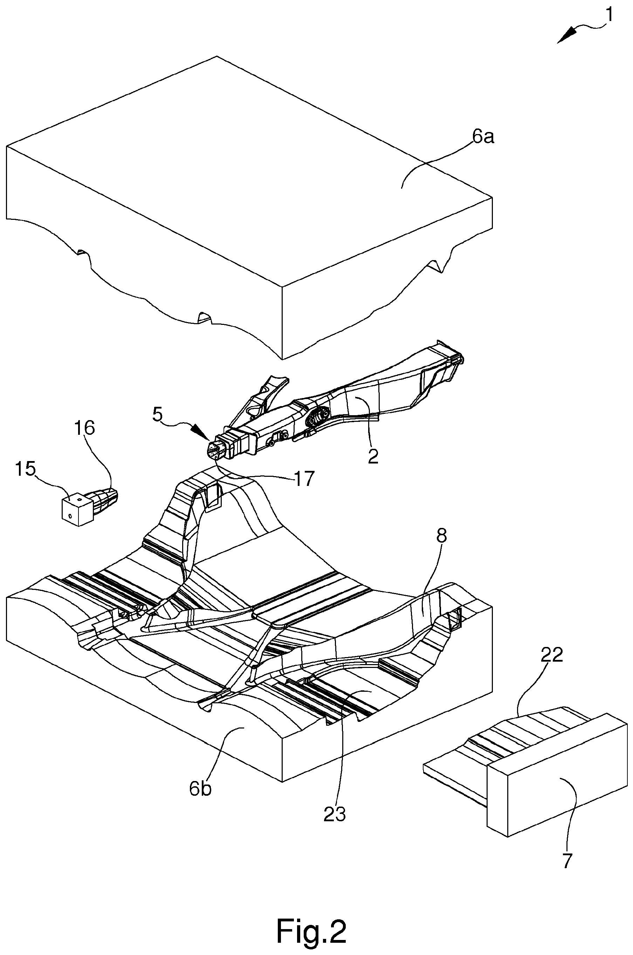

Figure 2 is an exploded view of some components of the system used to execute the process according to the invention;

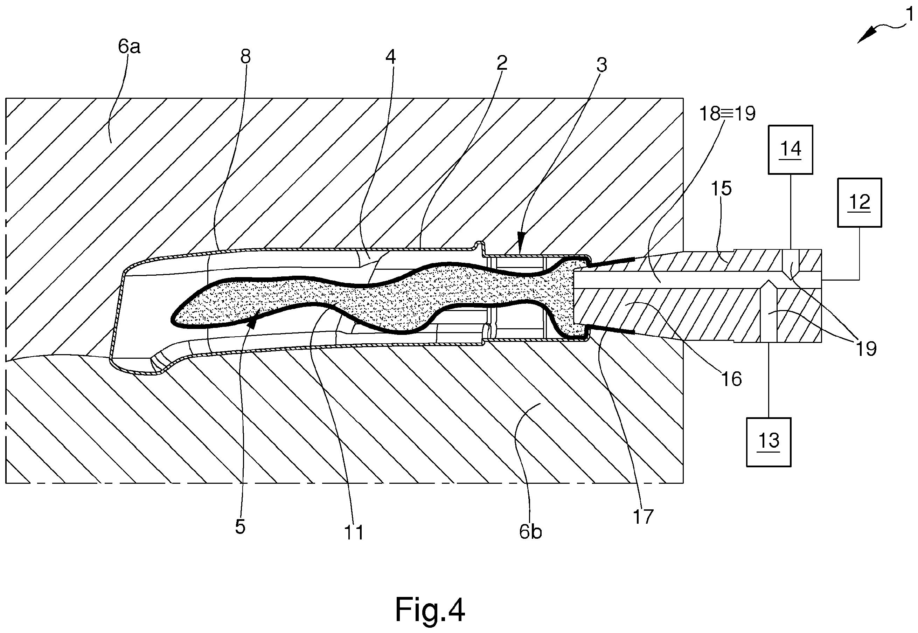

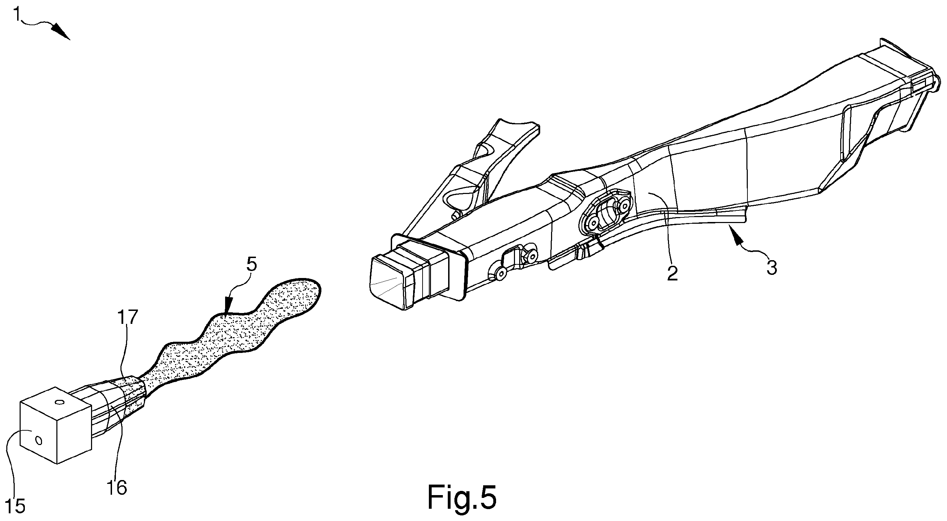

Figures 3-5 are views of some components of the system at distinct stages of the process according to the invention.

### Embodiments of the Invention

The process for the manufacture of hollow manufactured articles made of composite materials comprises:
- at least one phase of supply of at least one composite material 2 for the manufacture of a manufactured article 3 provided with one or more cavities 4;
- at least one phase of supply of at least one die body 5 having a conformation substantially equal to that of the manufactured article 3 to be made;
- at least one phase of supply of at least one mould 6a, 6b, 7 provided with at least two valve bodies 6a, 6b pressable under pressure against each other in order to define, interposed between the same bodies 6a, 6b, at least one groove 8 having a substantially complementary conformation to that of the manufactured article 3 to be made;
- at least one phase of arranging the die body 5 inside the groove 8;
- at least one phase of interposing the composite material 2 between the die body 5 and the mould 6a, 6b, 7, inside the groove 8;
- at least one phase of curing the composite material 2 contained in the groove 8, comprising at least one step of pressing the bodies 6a, 6b against each other in order to close the mould 6a, 6b, 7 at least partly around the die body 5, by pressing the composite material 2 under pressure between the die body 5 and the bodies 6a, 6b.

Conveniently, the composite material 2 comprises at least one first constituent material selected from the list comprising: organic and non-organic polymeric materials, metallic materials, ceramic materials and the like.

Appropriately, the composite material 2 comprises at least one second constituent material selected from the list comprising: glass fiber, carbon fiber, aramid fiber, boron fiber, silicon carbide fibers and the like.

The phase of supply of the die body 5 comprises at least one step of making the same by means of a molding process of at least one material to be machined, preferably of the thermoplastic type or the like, to make the die body 5.

The step of manufacturing comprises a step of modeling the material to be machined which involves giving the material itself, i.e., the die body 5, the conformation of the manufactured article 3 to be manufactured.

The step of manufacturing the die body 5 is carried out by means of a Blow Molding process. In this way, the die body 5 is made substantially hollow.

Appropriately, the process comprises at least one phase of laminating the composite material 2 around the die body 5 to give the composite material 2 the conformation of the manufactured article 3.

In other words, the process involves employing the die body 5 as a spindle which, in this way, transfers its conformation to the composite material 2. In other words, the die body 5 shapes the composite material 2 which, in this way, defines the cavity 4 of the manufactured article 3 to be made.

In fact, following the phase of laminating, the cavity 4 defined by the composite material 2 is occupied by the die body 5 to size.

Specifically, the phase of laminating comprises at least one step of introducing at least one pressurized operating fluid inside the die body 5.

Preferably, the operating fluid is a fluid of the compressible type. Further embodiments of the process cannot however be ruled out wherein the operating fluid is of the incompressible type.

Preferably, the operating fluid is air, water or similar fluids.

In this way, the step of introducing gives rigidity to the die body 5 and facilitates the execution of the phase of laminating.

Advantageously, the process according to the invention comprises at least one phase of testing the composite material 2 for tightness, comprising at least one step of introducing at least one test fluid under pressure into the composite material 2 having the conformation of the manufactured article 3.

Preferably, the test fluid is a fluid of the compressible type. However, further embodiments of the process wherein the test fluid is of the incompressible type cannot be ruled out.

The test fluid preferably coincides with the operating fluid.

Preferably, the test fluid is air, water or similar fluids.

In particular, the testing phase is carried out following the phase of laminating and, preferably, before the phase of curing.

In this way, the process makes it possible to check for the tightness of the composite material 2, shaped as the manufactured article 3 to be made, before carrying out the phase of curing and thus avoiding waste. In fact, this expedient allows the process to avoid the execution of a phase of curing on a composite material 2 that does not meet the desired tightness requirements.

Preferably, the process according to the invention involves arranging the die body 5 inside the groove 8 after the tightness testing phase.

Conveniently, the phase of arranging the die body 5 and the phase of interposing the composite material 2 coincide with each other.

In fact, preferably following the phase of laminating, the composite material 2 is arranged inside the groove 8 at the same time as the arrangement of the die body 5 inside the same groove.

Preferably, the process according to the invention involves carrying out the phase of curing after the phase of interposing.

Advantageously, the phase of curing comprises at least one step of filling the die body 5 with at least one working fluid under pressure.

Preferably, the working fluid is a fluid of the compressible type. Further embodiments of performing the process cannot however be ruled out wherein the working fluid is of the incompressible type.

The working fluid preferably coincides with the operating fluid.

Preferably, the working fluid is air, water, hydraulic oil or similar fluids.

In this way, the die body 5 counteracts from the inside of the cavity 4 the pressure exerted by the mould 6a, 6b, 7 on the composite material 2.

In fact, the die body 5 operates from the inside of the cavity 4 on the inner walls of the composite material 2, while the mould 6a, 6b, 7 operates from the outside of the cavity 4 on the outer walls of the composite material 2.

In other words, the die body 5 and the mould 6a, 6b, 7 substantially operate in a vice fashion on the composite material 2.

This expedient preserves the soundness of the conformation and of the geometry of the composite material 2, particularly of its cavity or cavities 4, and consequently also of the manufactured article 3 it makes.

In fact, the effect of the working fluid under pressure inside the die body 5 allows the composite material 2 to maintain its shape without undergoing deformation under the effect of the pressure exerted by the mould 6a, 6b, 7.

In particular, this expedient allows the composite material 2 to be subjected to extremely high pressures, so that, regardless of the composite material 2 used, a high degree of curing of the same is ensured. Consequently, this expedient allows for the simple, inexpensive and fast manufacturing of the manufactured articles 3 having complex/articulated conformations and geometries, e.g., defining one or more cavities 4.

Appropriately, the step of filling the die body 5 is carried out prior to the step of pressure of the bodies 6a, 6b. In addition, the working fluid is kept under pressure inside the die body 5 substantially during the whole execution of the step of pressure.

Conveniently, the phase of curing comprises at least one step of heating the mould 6a, 6b, 7.

Advantageously, the phase of heating facilitates the curing of the composite material 2.

In particular, the phase of heating is carried out throughout the execution of the step of pressure.

In fact, the combination of the phase of heating and the step of pressure further facilitates the curing of the composite material 2.

Preferably, at the end of the phase of curing, the process according to the invention involves a phase of extracting the manufactured article 3 from the mould 6a, 6b, 7.

In addition, the process comprises at least one phase of extracting the working fluid from the die body 5.

Advantageously, the phase of extracting is carried out during or after the phase of extracting the manufactured article 3.

Appropriately, the process comprises at least one phase of reducing the internal pressure of the die body 5 to the point of causing it to contract upon itself. Preferably, the phase of reducing the internal pressure of the die body 5 involves substantially making the vacuum inside the die body 5.

In this way, the die body 5 collapses at least partly on itself and is detached from the inner walls of the manufactured article 3. This expedient allows the die body 5 to be easily extracted from the cavity 4.

The present invention relates to a system 1 for the manufacture of hollow manufactured articles made of composite material according to the process described above.

In particular, what has been described about the die body 5, the mould 6a, 6b, 7, the composite material 2 and the manufactured article 3 with reference to the above-described process is to be considered completely or at least partly valid with reference to the system 1.

The system 1 for the manufacture of hollow manufactured articles made of composite material comprises:
- at least one die body 5 having a conformation substantially the same as that of a manufactured article 3 which is provided with one or more cavities 4 and to be made at least partly of composite material 2;
- at least one mould 6a, 6b, 7 provided with at least two valve bodies 6a, 6b pressable under pressure against each other in a working configuration wherein the same mould is closed and defines, interposed between the bodies 6a, 6b, at least one groove 8 having a conformation substantially complementary to that of the manufactured article 3 to be made and housing the die body 5 and the composite material 2, the composite material 2 being pressed under pressure between the die body 5 and the bodies 6a, 6b in the working configuration to make the manufactured article 3.

Specifically, the die body 5 comprises at least one outer lateral surface 24 having a conformation substantially the same as the outer lateral surface of the manufactured article 3 to be made.

In more detail, the die body 5 is adapted to be wrapped by the composite material 2 and to give it the conformation of the manufactured article 3 to be made.

In fact, preferably, the die body 5 is used for the execution of the phase of laminating.

Moreover, in this way, the cavity 4 is defined by effect of the die body 5.

In particular, the cavity 4 has a conformation substantially complementary to the conformation of the die body 5.

In addition, in the working configuration, the die body 5 counteracts the pressure exerted by the bodies 6a, 6b on the composite material 2 as previously described with reference to the process according to the invention. Advantageously, the die body 5 is at least partly hollow.

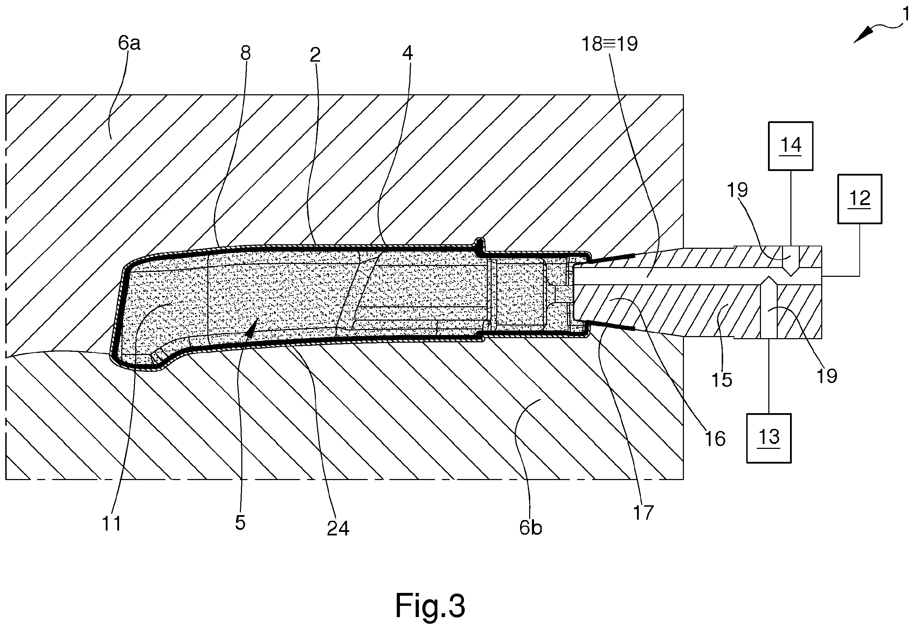

In fact, the die body 5 defines at least one void 11 within it, as shown in Figure 3.

In addition, the die body 5 is made of at least partly deformable and/or elastically deformable material.

Conveniently, the system 1 comprises at least one connecting element 15 of the die body 5 to at least one of:
- input means 12 of at least one working fluid under pressure into the die body 5;
- extraction means 13 of the working fluid from the die body 5;
- reduction means 14 of the internal pressure of the die body 5 to the point of causing it to contract upon itself.

Advantageously, the system 1 comprises at least one of the input means 12, the extraction means 13 or the reduction means 14.

According to the invention, the input means 12 are used to carry out the step of introducing and/or the testing phase and/or the input phase.

The extraction means 13, on the other hand, are used to carry out the phase of extraction.

The reduction means 14, on the other hand, are used to carry out the phase of reduction.

Preferably, at least one of either the input means 12 or the extraction means 13 are of the type of air-operated/hydraulic means configured to introduce under pressure and/or to extract the working fluid from the die body 5.

The reduction means 14 are, preferably, of the type of air-operated means configured to extract air from the inside of the die body 5.

Preferably, the connecting element 15 is employed for the execution of at least one of the step of introduction, the testing phase, the phase of input, the phase of extraction and the phase of reduction.

Specifically, the connecting element 15 is employed for the execution of the step of introduction, the phase of testing, the input phase, the phase of extraction and the phase of reduction.

Preferably, the connecting element 15 can be coupled to the die body 5 in a removable manner so that at least one of the input means 12, the extraction means 13 and the reduction means 14 can be connected to the die body 5.

Specifically, the connecting element 15 connects the input means 12, the extraction means 13 and the reduction means14 to the die body 5.

According to the invention, the system 1 comprises at least a first coupling portion 16, made on the die body 5, and at least a second coupling portion 17, made on the connecting element 15 and coupleable to the first coupling portion 16 in a removable manner to enable the connection of at least one of the input means 12, the extraction means 13 or the reduction means 14 to the die body 5.

Preferably, one of either the first or the second coupling portions 16, 17 is of the type of an access opening and the other of either the first or the second coupling portions 16, 17 is of the type of a protruding portion which is insertable in a removable manner in the access opening.

In addition, preferably, the access opening is made on the die body 5 and the protruding portion is made on the connecting element 15.

Conveniently, the connecting element 15 defines a plurality of connecting ways 18, 19, each connected to the die body 5 and to at least one of the input means 12, the extraction means 13 or the reduction means 14.

Preferably, the connecting element 15 is of the type of a multi-way valve. According to a preferred, but not exclusive, embodiment of the system 1, the connecting element 15 comprises:
- at least one common way 18 connected, in use, to the die body 5;
- a plurality of connecting ways 19 to the common way 18, each of the connecting ways 19 being connected to one of the input means 12, the extraction means 13 or the reduction means 14, respectively.

Specifically, the connecting element 15 comprises a connecting way 19 connected to the input means 12 and coincident with the common way 18, a connecting way 19 connected to the extraction means 13 and to the common way 18 and a connecting way 19 connected to the reduction means 14 and to the common way 18, as shown in Figure 3.

In this way, the system 1 enables the execution of the step of introducing, the testing phase, the input phase, the phase of extraction and the phase of reduction with a single connecting element 15.

Conveniently, the system 1 comprises heating means, not shown in the figures, of the mould 6a, 6b, 7.

The heating means are preferably of the type of thermal power plants that employ a fluid, such as e.g. steam or diathermic oil, to heat the system 1.

In other words, the temperature means are configured to send the system 1 to temperature.

Preferably, the heating means are built into the mould 6a, 6b, 7.

Specifically, the heating means are connected to at least one of the valve bodies 6a, 6b and are configured to heat at least one of them.

In fact, preferably, the heating means are used to carry out the phase of heating. Preferably, in the working configuration, at least one of the bodies 6a, 6b of the mould 6a, 6b, 7 defines at least one access opening 23 to the groove 8. In addition, the mould 6a, 6b, 7 comprises at least one pressing body 7 having a substantially complementary conformation with respect to the access opening 23 and provided with at least one pressing face 22 facing inside the groove 8 in the working configuration.

Specifically, the pressing face 22, in use, preferably during the step of pressure, presses against the composite material 2 under pressure.

In fact, the pressing face 22 defines at least one template, not shown in the figures, adapted to shape the portion of the composite material 2 with which it gets in contact.

It has in practice been ascertained that the described invention achieves the intended objects.

In particular, the fact is emphasized that the use of the die body allows for the manufacture of manufactured articles from any composite material.

In addition, the use of the die body allows for higher pressures and/or temperatures to be applied to the composite material used to make hollow manufactured articles than those applied by the processes of known type regardless of the composite material used.

Advantageously, the use of the die body enables a particularly inexpensive and/or simple process for the manufacture of hollow manufactured articles made of composite material compared with the processes of known type.

## Claims

1. Process for the manufacture of hollow manufactured articles made of composite material, comprising:
- at least one phase of supply of a composite material (2) for the manufacture of a manufactured article (3) provided with one or more cavities (4);
- at least one phase of supply of at least one die body (5) having a conformation substantially equal to that of the manufactured article (3) to be made, said phase of supply of said die body (5) comprises at least one step of manufacturing the same by means of a molding process of at least one material to be machined of the thermoplastic type to make said die body (5), said step of manufacturing said die body (5) is carried out by means of a blow molding process and said die body (5) is made substantially hollow;
- at least one phase of supply of at least one mould (6a, 6b, 7) provided with at least two halve bodies (6a, 6b) pressable under pressure against each other in order to define, interposed between the same bodies (6a, 6b), at least one mould cavity (8) having a substantially complementary conformation to that of the manufactured article (3) to be made;
- at least one phase of arranging said die body (5) inside said mould cavity (8);
- at least one phase of interposing said composite material (2) between said die body (5) and said mould (6a, 6b, 7), inside said mould cavity (8);
- at least one phase of curing the composite material (2) contained in said mould cavity (8), comprising at least one step of pressing said bodies (6a, 6b) against each other in order to close said mould (6a, 6b, 7) at least partly around said die body (5), by pressing said composite material (2) under pressure between said die body (5) and said bodies (6a, 6b).

2. Process according to claim 1, **characterized by** the fact that said phase of curing comprises at least one step of filling said die body (5) with at least one working fluid under pressure.

3. Process according to one or more of the preceding claims, **characterized by** the fact that said phase of curing comprises at least one step of heating said mould (6a, 6b, 7).

4. Process according to one or more of the preceding claims, **characterized by** the fact that it comprises at least one phase of reducing the internal pressure of said die body (5) to the point of causing it to contract upon itself.

5. Process according to one or more of the preceding claims, **characterized by** the fact that said phase of arranging said die body (5) and said phase of interposing said composite material (2) coincide with each other.

6. Process according to one or more of the preceding claims, **characterized by** the fact that it comprises at least one phase of laminating said composite material (2) around said die body (5) to give said composite material (2) the conformation of said manufactured article (3).

7. Process according to one or more of the preceding claims, **characterized by** the fact that it comprises at least one phase of testing said composite material (2) for tightness, comprising at least one step of introducing at least one test fluid under pressure into said composite material (2) having the conformation of said manufactured article (3).

8. System (1) for the manufacture of hollow manufactured articles made of composite material, comprising:
- at least one die body (5) having a conformation substantially the same as that of a manufactured article (3) which is provided with one or more cavities (4) and to be made at least partly of composite material (2), said die body (5) is manufactured by means of a molding process of at least one material to be machined of the thermoplastic type to make said die body (5), the manufacturing of said die body (5) is carried out by means of a blow molding process and said die body (5) is made substantially hollow;
- at least one mould (6a, 6b, 7) provided with at least two halve bodies (6a, 6b) pressable under pressure against each other in a working configuration wherein the same mould is closed and defines, interposed between said bodies (6a, 6b), at least one mould cavity (8) having a conformation substantially complementary to that of the manufactured article (3) to be made and housing said die body (5) and the composite material (2), said composite material (2) being pressed under pressure between said die body (5) and said bodies (6a, 6b) in said working configuration to make said manufactured article (3).

9. System (1) according to claim 8, **characterized by** the fact that said die body (5) is made of at least partly deformable and/or elastically deformable material.

10. System (1) according to one or more of claims 8 to 9, **characterized by** the fact that said die body (5) is at least partly hollow and by the fact that it comprises at least one connecting element (15) of said die body (5) to at least one of:
- input means (12) of at least one working fluid under pressure into said die body (5);
- extraction means (13) of said working fluid from said die body (5);
- reduction means (14) of the internal pressure of said die body (5) to the point of causing it to contract upon itself.

11. System (1) according to one or more of claims 8 to 10, **characterized by** the fact that said connecting element (15) defines a plurality of connecting ways (19), each connected to said die body (5) and to at least one of said input means (12), said extraction means (13) or said reduction means (14).

12. System (1) according to one or more of claims 8 to 11, **characterized by** the fact that it comprises heating means of said mould (6a, 6b, 7).

## Patentansprüche

1. Verfahren zur Fertigung von hohlen gefertigten Artikeln aus Verbundwerkstoff, umfassend:
- mindestens eine Phase der Bereitstellung eines Verbundwerkstoffs (2) zur Fertigung eines mit einem oder mehreren Hohlräumen (4) versehenen gefertigten Artikels (3);
- mindestens eine Phase der Bereitstellung mindestens eines Formkörpers (5), dessen Gestalt im Wesentlichen der des herzustellenden gefertigten Artikels (3) entspricht, wobei die Phase der Bereitstellung des Formkörpers (5) mindestens einen Schritt der Fertigung desselben mittels eines Formverfahrens aus mindestens einem zu bearbeitenden Material thermoplastischer Art umfasst, um den Formkörper (5) herzustellen, wobei der Schritt der Fertigung des Formkörpers (5) mittels eines Blasformverfahrens durchgeführt wird und der Formkörper (5) im Wesentlichen hohl ausgebildet ist;
- mindestens eine Phase der Bereitstellung mindestens einer Form (6a, 6b, 7), die mit mindestens zwei halben Körpern (6a, 6b) versehen ist, die unter Druck gegeneinander gepresst werden können, um zwischen diesen Körpern (6a, 6b) mindestens einen Formhohlraum (8) zu bilden, dessen Gestalt im Wesentlichen komplementär zu der des gefertigten Artikels (3) ist;
- mindestens eine Phase des Anordnens des Formkörpers (5) innerhalb des Formhohlraums (8);
- mindestens eine Phase des Einbringens des Verbundwerkstoffs (2) zwischen den Formkörper (5) und die Form (6a, 6b, 7) innerhalb des Formhohlraums (8);
- mindestens eine Phase des Aushärtens des in dem Formhohlraum (8) enthaltenen Verbundwerkstoffs (2), umfassend mindestens einen Schritt des Pressens der Körper (6a, 6b) gegeneinander, um die Form (6a, 6b, 7) zumindest teilweise um den Formkörper (5) herum zu schließen, indem der Verbundwerkstoff (2) unter Druck zwischen den Formkörper (5) und die Körper (6a, 6b) gepresst wird.

2. Verfahren nach Anspruch 1, **dadurch gekennzeichnet, dass** die Phase des Aushärtens mindestens einen Schritt des Füllens des Formkörper (5)s mit mindestens einem unter Druck stehenden Arbeitsfluid umfasst.

3. Verfahren nach einem oder mehreren der vorstehenden Ansprüche, **dadurch gekennzeichnet, dass** die Phase des Aushärtens mindestens einen Schritt des Heizens der Form (6a, 6b, 7) umfasst.

4. Verfahren nach einem oder mehreren der vorstehenden Ansprüche, **dadurch gekennzeichnet, dass** es mindestens eine Phase des Reduzierens des Innendrucks des Formkörpers (5) umfasst, bis dieser sich in sich selbst zusammenzieht.

5. Verfahren nach einem oder mehreren der vorstehenden Ansprüche, **dadurch gekennzeichnet, dass** die Phase des Anordnens des Formkörpers (5) und die Phase des Einbringens des Verbundwerkstoffs (2) zusammenfallen.

6. Verfahren nach einem oder mehreren der vorstehenden Ansprüche, **dadurch gekennzeichnet, dass** es mindestens eine Phase des Laminierens des Verbundwerkstoffs (2) um den Formkörper (5) herum umfasst, um dem Verbundwerkstoff (2) die Gestalt des gefertigten Artikels (3) zu verleihen.

7. Verfahren nach einem oder mehreren der vorstehenden Ansprüche, **dadurch gekennzeichnet, dass** es mindestens eine Phase des Prüfens des Verbundwerkstoffs (2) auf Dichtheit umfasst, die mindestens einen Schritt des Einleitens mindestens einer Prüfflüssigkeit unter Druck in den Verbundwerkstoff (2) mit der Gestalt des gefertigten Artikels (3) umfasst.

8. System (1) zur Fertigung von hohlen gefertigten Artikeln aus Verbundwerkstoff, umfassend:
- mindestens einen Formkörper (5) mit einer im Wesentlichen gleichen Gestalt wie die eines gefertigten Artikels (3), der mit einem oder mehreren Hohlräumen (4) versehen ist und zumindest teilweise aus Verbundwerkstoff (2) bestehen soll, wobei der Formkörper (5) mittels eines Formverfahrens aus mindestens einem zu bearbeitenden Material thermoplastischer Art gefertigt wird, um den Formkörper (5) herzustellen, wobei die Fertigung des Formkörpers (5) mittels eines Blasformverfahrens erfolgt und der Formkörper (5) im Wesentlichen hohl ausgebildet ist;
- mindestens eine Form (6a, 6b, 7), die mit mindestens zwei halben Körpern (6a, 6b) versehen ist, die in einer Arbeitskonfiguration unter Druck gegeneinander pressbar sind, wobei die Form geschlossen ist und zwischen den Körpern (6a, 6b) mindestens einen Formhohlraum (8) bildet, dessen Gestalt im Wesentlichen komplementär zu der des gefertigten herzustellenden Artikels (3) ist und der den Formkörper (5) sowie den Verbundwerkstoff (2) aufnimmt, wobei der Verbundwerkstoff (2) unter Druck zwischen dem Formkörper (5) und den Körpern (6a, 6b) in der Arbeitskonfiguration gepresst wird, um den gefertigten Artikel (3) zu herstellen.

9. System (1) nach Anspruch 8, **dadurch gekennzeichnet, dass** der Formkörper (5) aus zumindest teilweise verformbarem und/oder elastisch verformbarem Material besteht.

10. System (1) nach einem oder mehreren der Ansprüche 8 bis 9, **dadurch gekennzeichnet, dass** der Formkörper (5) zumindest teilweise hohl ist und dass er mindestens ein Verbindungselement (15) des Formkörpers (5) mit mindestens einem der folgenden Elemente umfasst:
- Mittel zur Eingabe (12) für mindestens ein unter Druck stehendes Arbeitsfluid in den Formkörper (5);
- Mittel zur Entnahme (13) des Arbeitsfluids aus dem Formkörper (5);
- Mittel zur Reduktion (14) des Innendrucks des Formkörpers (5), um dessen Zusammenziehen zu bewirken.

11. System (1) nach einem oder mehreren der Ansprüche 8 bis 10, **dadurch gekennzeichnet, dass** das Verbindungselement (15) eine Mehrzahl von Verbindungswegen (19) definiert, die jeweils mit dem Formkörper (5) und mit mindestens einem der Folgenden verbunden sind: den Mitteln zur Eingabe (12), den Mitteln zur Entnahme (13) oder den Mitteln zur Reduktion (14).

12. System (1) nach einem oder mehreren der Ansprüche 8 bis 11, **dadurch gekennzeichnet, dass** es Mittel zum Beheizen der Form (6a, 6b, 7) umfasst.

## Revendications

1. - Procédé de fabrication d'articles manufacturés creux en matériau composite, comprenant :
- au moins une phase de fourniture d'un matériau composite (2) pour la fabrication d'un article manufacturé (3) comportant une ou plusieurs cavités (4) ;
- au moins une phase de fourniture d'au moins un corps de matrice (5) ayant une conformation sensiblement égale à celle de l'article manufacturé (3) à fabriquer, ladite phase de fourniture dudit corps de matrice (5) comprenant au moins une étape de fabrication de celui-ci au moyen d'un procédé de moulage d'au moins un matériau à usiner du type thermoplastique pour fabriquer ledit corps de matrice (5), ladite étape de fabrication dudit corps de matrice (5) étant effectuée au moyen d'un procédé de moulage par soufflage et ledit corps de matrice (5) étant réalisé sensiblement creux ;
- au moins une phase de fourniture d'au moins un moule (6a, 6b, 7) comportant au moins deux demi-corps (6a, 6b) comprimables sous pression l'un contre l'autre afin de définir, interposée entre ces mêmes corps (6a, 6b), au moins une cavité de moule (8) ayant une conformation sensiblement complémentaire de celle de l'article manufacturé (3) à fabriquer ;
- au moins une phase de disposition dudit corps de matrice (5) à l'intérieur de ladite cavité de moule (8) ;
- au moins une phase d'interposition dudit matériau composite (2) entre ledit corps de matrice (5) et ledit moule (6a, 6b, 7), à l'intérieur de ladite cavité de moule (8) ;
- au moins une phase de durcissement du matériau composite (2) contenu dans ladite cavité de moule (8), comprenant au moins une étape de pressage desdits corps (6a, 6b) l'un contre l'autre afin de fermer ledit moule (6a, 6b, 7) au moins partiellement autour dudit corps de matrice (5), en comprimant ledit matériau composite (2) sous pression entre ledit corps de matrice (5) et lesdits corps (6a, 6b).

2. - Procédé selon la revendication 1, **caractérisé par le fait que** ladite phase de durcissement comprend au moins une étape de remplissage dudit corps de matrice (5) avec au moins un fluide de travail sous pression.

3. - Procédé selon l'une ou plusieurs des revendications précédentes, **caractérisé par le fait que** ladite phase de durcissement comprend au moins une étape de chauffage dudit moule (6a, 6b, 7).

4. - Procédé selon l'une ou plusieurs des revendications précédentes, **caractérisé par le fait qu'**il comprend au moins une phase de réduction de la pression interne dudit corps de matrice (5) au point de l'amener à se contracter sur lui-même.

5. - Procédé selon l'une ou plusieurs des revendications précédentes, **caractérisé par le fait que** ladite phase de disposition dudit corps de matrice (5) et ladite phase d'interposition dudit matériau composite (2) coïncident l'une avec l'autre.

6. - Procédé selon l'une ou plusieurs des revendications précédentes, **caractérisé par le fait qu'**il comprend au moins une phase de laminage dudit matériau composite (2) autour dudit corps de matrice (5) afin de donner audit matériau composite (2) la conformation dudit article manufacturé (3).

7. - Procédé selon l'une ou plusieurs des revendications précédentes, **caractérisé par le fait qu'**il comprend au moins une phase d'essai dudit matériau composite (2) pour l'étanchéité, comprenant au moins une étape d'introduction d'au moins un fluide d'essai sous pression dans ledit matériau composite (2) ayant la conformation dudit article manufacturé (3).

8. - Système (1) pour la fabrication d'articles manufacturés creux en matériau composite, comprenant :
- au moins un corps de matrice (5) ayant une conformation sensiblement identique à celle d'un article manufacturé (3), qui comporte une ou plusieurs cavités (4) et doit être fait au moins en partie en matériau composite (2), ledit corps de moule (5) étant fabriqué au moyen d'un procédé de moulage d'au moins un matériau à usiner du type thermoplastique pour fabriquer ledit corps de matrice (5), la fabrication dudit corps de matrice (5) étant effectuée au moyen d'un procédé de moulage par soufflage et ledit corps de matrice (5) étant réalisé sensiblement creux ;
- au moins un moule (6a, 6b, 7) comportant moins deux demi-corps (6a, 6b) comprimables sous pression l'un contre l'autre dans une configuration de travail dans laquelle ce même moule est fermé et définit, interposée entre lesdits corps (6a, 6b), au moins une cavité de moule (8) ayant une conformation sensiblement complémentaire de celle de l'article manufacturé (3) à fabriquer et recevant ledit corps de matrice (5) et le matériau composite (2), ledit matériau composite (2) étant comprimé sous pression entre ledit corps de matrice (5) et lesdits corps (6a, 6b) dans ladite configuration de travail pour fabriquer ledit article manufacturé (3).

9. - Système (1) selon la revendication 8, **caractérisé par le fait que** ledit corps de matrice (5) est fait d'un matériau au moins partiellement déformable et/ou élastiquement déformable.

10. - Système (1) selon l'une ou plusieurs des revendications 8 à 9, **caractérisé par le fait que** ledit corps de matrice (5) est au moins partiellement creux et **par le fait qu'**il comprend au moins un élément de liaison (15) dudit corps de matrice (5) à au moins l'un parmi :
- des moyens d'entrée (12) d'au moins un fluide de travail sous pression dans ledit corps de matrice (5) ;
- des moyens d'extraction (13) dudit fluide de travail à partir dudit corps de matrice (5) ;
- des moyens de réduction (14) de la pression interne dudit corps de matrice (5) au point de l'amener à se contracter sur lui-même.

11. - Système (1) selon l'une ou plusieurs des revendications 8 à 10, **caractérisé par le fait que** ledit élément de liaison (15) définit une pluralité de voies de liaison (19), chacune étant reliée audit corps de matrice (5) et à au moins l'un parmi lesdits moyens d'entrée (12), lesdits moyens d'extraction (13) ou lesdits moyens de réduction (14).

12. - Système (1) selon l'une ou plusieurs des revendications 8 à 11, **caractérisé par le fait qu'**il comprend des moyens de chauffage dudit moule (6a, 6b, 7).
